# EUROPÄISCHE PATENTANMELDUNG

(11) **EP 2 039 491 A1**
(43) Veröffentlichungstag der Anmeldung: **25.03.2009**
(21) Anmeldenummer: 07018360.3
(22) Anmeldetag: 19.09.2007
(51) Int. Cl.: B29C 45/16, B29C 45/14

(54) **Verfahren zum Einbringen einer Dichtung eines Steckverbindungsteiles**

(71) Anmelder: ifm Manfred Otte GmbH, 4563 Micheldorf (AT)
(72) Erfinder: Ebner, Josef, Ing., 4563 Micheldorf (AT); Eigruber, Sebastian, Dipl.-Ing., 9523 Neulandskron (AT); Demmel, Andreas, 4810 Gmunden (AT)
(74) Vertreter: Landgraf, Elvira

(57) **Zusammenfassung**

Verfahren zum Einbringen einer Dichtung (1) eines Steckverbindungsteils, dadurch gekennzeichnet, dass die Dichtung (Weichkomponente) in der Form (3,4) eingebracht wird, in der das Steckverbindungsteil (Hartkomponente) (2) hergestellt wird, wobei nur eine Werkzeugöffnungsbewegung erforderlich ist, und wobei die Dichtung ohne Umlegen des Steckverbindungsteils eingebracht werden kann. In einer bevorzugten Ausführungsform wird die noch plastische Hartkomponente durch das Einspritzen der Weichkomponente nach außen gedrückt.

## Beschreibung

Die Erfindung betrifft ein Verfahren zum Einbringen einer Dichtung eines Steckverbindungsteils.

Dichtungen für Steckverbindungsteile werden nach dem derzeitigen Stand der Technik nach Herstellung eines Steckverbindungsteils im Gussverfahren entweder händisch oder mittels eines Bestückungsautomaten an der vorgesehenen Stelle des Steckverbindungsteils platziert.

Ferner ist bekannt nach Herstellung des Steckverbindungsteils dieses in eine zweite Form oder in ein zweites Formnest zu transferieren und in diesem zweiten Formnest die Dichtung im Spritzguss anzuspritzen.

Aufgabe der Erfindung war es ein Verfahren zum Einbringen einer Dichtung eines Steckverbindungsteils bereitzustellen, bei dem die Dichtung ohne Umlegen des Steckverbindungsteils eingebracht werden kann.

Gegenstand der Erfindung ist daher ein Verfahren zum Einbringen einer Dichtung eines Steckverbindungsteils, dadurch gekennzeichnet, dass die Dichtung (Weichkomponente) in der Form eingebracht wird, in der das Steckverbindungsteil hergestellt wird, wobei nur eine Werkzeugöffnungsbewegung erforderlich ist.

Dadurch kann die Herstellung eines Steckverbindungsteils mit Dichtung vereinfacht und rationalisiert werden.

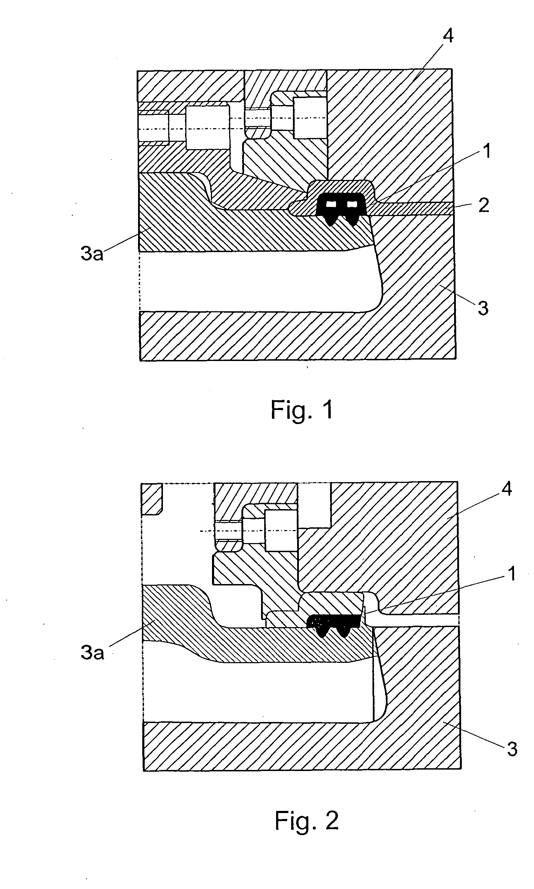

In einer Ausführungsform des Verfahrens wird dabei der fertige Dichtring in das Werkzeug eingelegt. Dies kann per Hand oder mittels eines Automaten erfolgen. Anschließend wird die Form geschlossen und die Außenhaut (das Steckverbindungsteil) im Spritzguss hergestellt.
Nach dem Öffnen der Form kann das Steckverbindungsteil mit eingebrachter Dichtung entnommen oder ausgeworfen werden.
Ein derartiges Verfahren ist in Fig. 1 dargestellt.

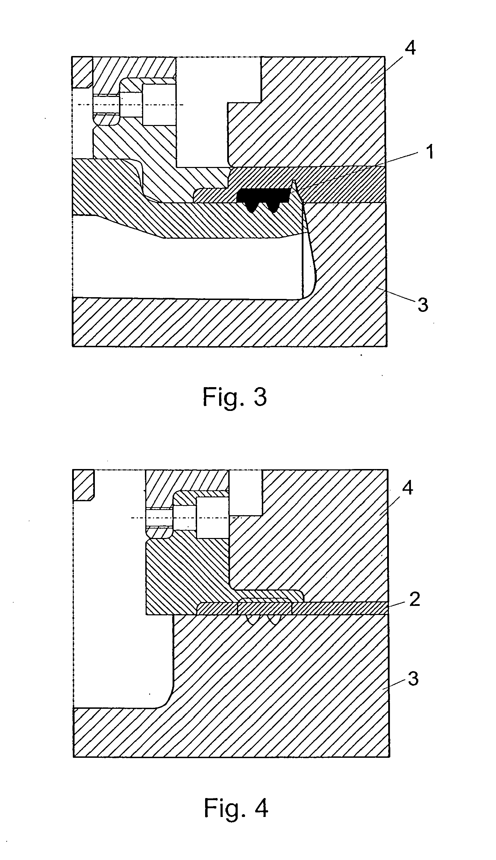

In einer weiteren Ausführungsform wird in der Form zuerst die Dichtung durch Spritzgießen der Weichkomponente gebildet. Dabei wird in der Form nur der Bereich freigelassen, in den die Dichtung gespritzt wird, nämlich die Dichtungskammer.
Anschließend wird jener Bereich freigegeben, in dem das Steckverbindungsteil spritzgegossen wird. Nach diesem Spritzvorgang kann nach Abkühlen der Formmasse das fertige Steckverbindungsteil mit der Dichtung entnommen bzw. ausgeworfen werden.
Ein derartiges Verfahren ist in den Fig. 2 und 3 dargestellt.

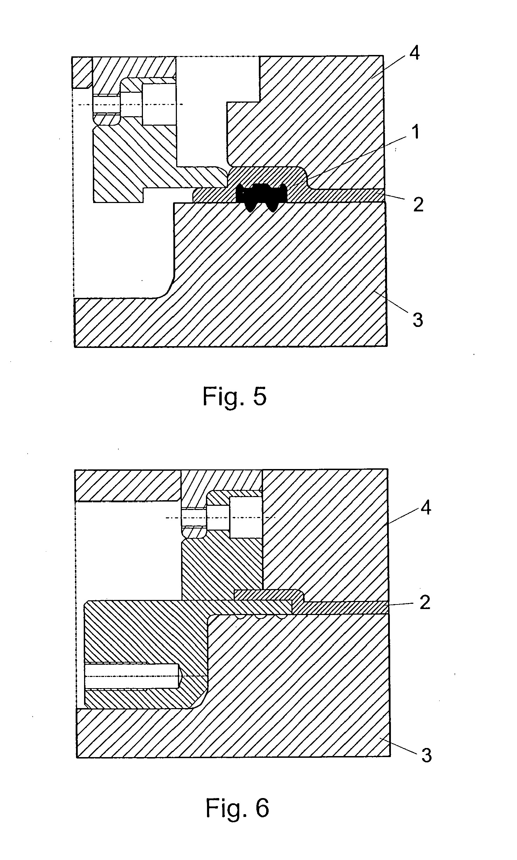

In einer weiteren Ausführungsform wird in der Form im ersten Schritt die Hartkomponente des Steckverbindungsteils verarbeitet. Anschließend wird, solange sich das Steckverbindungsteil noch in plastischem Zustand befindet, die Dichtungskammer freigegeben und die Weichkomponente eingespritzt.
Dabei wird die Hartkomponente durch das Einspritzen der Weichkomponente im Bereich der Dichtungskammer nach außen gedrückt und somit die Dichtungskammer geformt.
Nach Abkühlen und Öffnen der Form kann das fertige Steckverbindungsteil aus der Form entnommen werden.
Ein derartiges Verfahren ist in den Fig. 4 und 5 dargestellt.

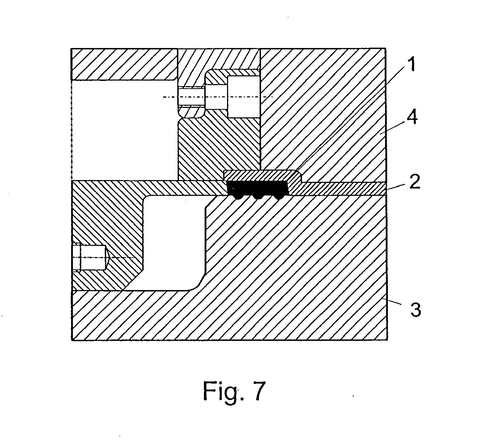

In einer weiteren Ausführungsform wird zuerst die Außenhaut (das Steckverbindungsteil) gespritzt. Nach ausreichendem Aushärten des Steckverbindungsteils wird die Dichtungskammer freigegeben und die Weichkomponente (Dichtung) eingespritzt.
Ein derartiges Verfahren ist in den Fig. 6 und 7 dargestellt.

Die Bewegungen im Werkzeug können hydraulisch, pneumatisch oder elektrisch erfolgen.

In den Figuren 1 bis 7 sind die Ausführungsformen des erfindungsgemäßen Verfahrens dargestellt. Darin bedeuten 1 die Weichkomponente (Dichtung), 2 die Außenhaut, und 3 den Kern, 3a ein Kernsegment, 4 die Außenform.

Vorzugsweise können derartige Verfahren in einer Spritzgussform durchgeführt werden, die einen Spreizkern oder einen Faltkern aufweist.

Die nach dem erfindungsgemäßen Verfahren hergestellten Steckverbindungsteile können für Trinkwasser- oder Abwasserleitungen, elektrische Schutzrohre, Fluidleitungen, wie Gas-, Abgas-, Luft oder Druckluftleitungen verwendet werden.

## Patentansprüche

1. Verfahren zum Einbringen einer Dichtung eines Steckverbindungsteils, **dadurch gekennzeichnet, dass** die Dichtung (Weichkomponente) in der Form eingebracht wird, in der das Steckverbindungsteil (Hartkomponente) hergestellt wird, wobei nur eine Werkzeugöffnungsbewegung erforderlich ist.

2. Verfahren nach Anspruch 1, **dadurch gekennzeichnet, dass** in der Spritzgussform vorerst die Weichkomponente in einer Dichtungskammer geformt wird und anschließend ein Bereich der Spritzgussform freigegeben wird und das Steckverbindungsteil in diesem Bereich gespritzt wird.

3. Verfahren nach Anspruch 1, **dadurch gekennzeichnet, dass** vorerst die Hartkomponente in der Spritzgussform zu einem Steckverbindungsteil gespritzt wird und solange die Hartkomponente noch in plastischem Zustand ist, die Dichtungskammer freigegeben wird und die Weichkomponente eingespritzt wird, wodurch die Hartkomponente nach außen gedrückt wird und die Dichtungskammer endgültig formt.

4. Verfahren nach Anspruch 1, **dadurch gekennzeichnet, dass** vorerst die Hartkomponente in der Spritzgussform zu einem Steckverbindungsteil gespritzt wird und anschließend die Dichtungskammer freigegeben wird und die Weichkomponente eingespritzt wird.

5. Verfahren nach Anspruch 1, **dadurch gekennzeichnet, dass** die Dichtung in die Dichtungskammer eingelegt, die Spritzgussform geschlossen und die Hartkomponente eingespritzt wird.

6. Verfahren nach einem der Ansprüche 1 bis 5 , **dadurch gekennzeichnet, dass** eine Spritzgussform, die einen Formkern, der aus Segmenten besteht, verwendet wird.

7. Steckverbindungsteile hergestellt nach einem der Verfahren gemäß Anspruch 1 bis 6.

8. Verwendung der Steckverbindungsteile nach Anspruch 7 für Trinkwasser- oder Abwasserleitungen, elektrische Schutzrohre, Fluidleitungen, wie Gas-, Abgas-, Luft oder Druckluftleitungen.
